# EUROPEAN PATENT APPLICATION

(11) **EP 4 566 925 A1**
(43) Date of publication of application: **11.06.2025**
(21) Application number: 23810277.6
(22) Date of filing: 01.08.2023
(51) Int. Cl.: B62D 55/30, B62D 55/15, B62D 55/12, B62D 55/18

(54) **TENSION MAINTENANCE UNIT OF CATERPILLAR APPARATUS, AND CATERPILLAR APPARATUS HAVING SAME**

(30) Priority: 01.08.2022 KR 20220095223; 31.07.2023 KR 20230099315
(71) Applicant: TAS Global Co., Ltd., Busan 46728 (KR)
(72) Inventor: LEE, Dong Wook, Gangseo-gu, Busan 46765 (KR)
(74) Representative: Zimmermann, Tankred Klaus
(86) International application number: PCT/KR2023/011270
(87) International publication number: WO 2024/029907

(57) **Abstract**

Disclosed are a tension maintaining unit for a caterpillar apparatus and a caterpillar apparatus including the same. The tension maintaining unit for the caterpillar apparatus includes: a rotation direction selector including a first one-way bearing unit with a first one-way bearing connected to a first rotary member of a continuous track body, and a second one-way bearing unit with a second one-way bearing connected to a second rotary member of the continuous track body; and an actuator transmitting power to the first one-way bearing unit and the second one-way bearing unit, wherein tension of a continuous track member provided in the continuous track body is prevented from being loosed as the continuous track body is driven with power of the second one-way bearing and the first one-way bearing rotates freely upon forward movement, the tension of the continuous track member is prevented from being loosened as the continuous track body is driven with power of the first one-way bearing and the second one-way bearing rotates freely upon backward movement, and the rotation direction selector is coupled to and receives power from an actuator output shaft provided in the actuator.

## Description

### [Technical Field]

The disclosure relates to a caterpillar apparatus, and more particularly to a tension maintaining unit for a caterpillar apparatus for a ship, in which continuous tracks are prevented from being released from the caterpillar apparatus due to failure in maintaining tension by preventing excessive force from being applied to a tensioner that controls the tension of a continuous track, and a caterpillar apparatus including the same.

### [Background Art]

In general, underwater creatures, such as barnacles, sea squirts, serpula, Mediterranean mussels, freshwater clams, green laver, and sea lettuce, are attached to and grown on a hull surface of a ship, thereby causing various damages.

For example, the underwater creatures attached to the hull surface of the ship increase frictional resistance with seawater, and therefore the ship is decreased in sailing speed and increased in fuel consumption, thereby having economical disadvantages.

Conventionally, there has been generally used a cleaning method by which a ship is moved to a land dock and a diver removes attachments from the hull wall of the ship in person by spraying water through a high-pressure hose. This method requires a preparation procedure for moving a ship to be cleaned to the dock, and thus has disadvantages that it takes long time to perform cleaning and many workers are required to be mobilized.

Instead of moving a ship, a diver may get into water and clean the bottom of a ship with cleaning equipment. However, the difficulty of cleaning is high even for divers who are skilled in underwater working environments because it takes long time to clean the large area of a hull and it is difficult to secure a clear view.

The method of cleaning the bottom of a ship by a diver in person has problems that it is difficult to efficiently remove the attachments and many workers are required. By taking such problems into account, there has been disclosed a method of applying paint mixed with highly toxic substances to prevent sea creatures from being attached to and grown on the surface of a ship.

Such a toxic paint applying method pollutes seawater and has harmful effects on other sea creatures, thereby causing another problem of destroying an aquatic ecosystem. Therefore, this method has been banned by international organizations. Further, the toxicity decreases as a certain period of time elapses, and therefore repainting is required after cleaning.

In consideration of all these problems, there has been disclosed a technology in which a cleaning robot removes attachments while traveling on the wall of a submerged hull.

Meanwhile, when the tension of continuous tracks is loosened while the cleaning vehicle travels to clean the ship, the continuous tracks is released. The continuous tracks are released for the following reasons: i) when the tension of the continuous tracks is loosened, ii) when a foreign material is caught between a track link and an idler or a sprocket, iii) when the track link is misaligned with the idler, sprocket, upper and lower rollers, and iv) when being traveled in a state that the track link is not level.

In addition, the tension is loosened by excessive force applied to a tensioner supporting the track link, and the reasons are as follows: i) when backward movement of a ship cleaning vehicle is obstructed by an obstacle or external force, and ii) when the continuous tracks are rotated in a backward direction while the ship cleaning vehicle turns in place.

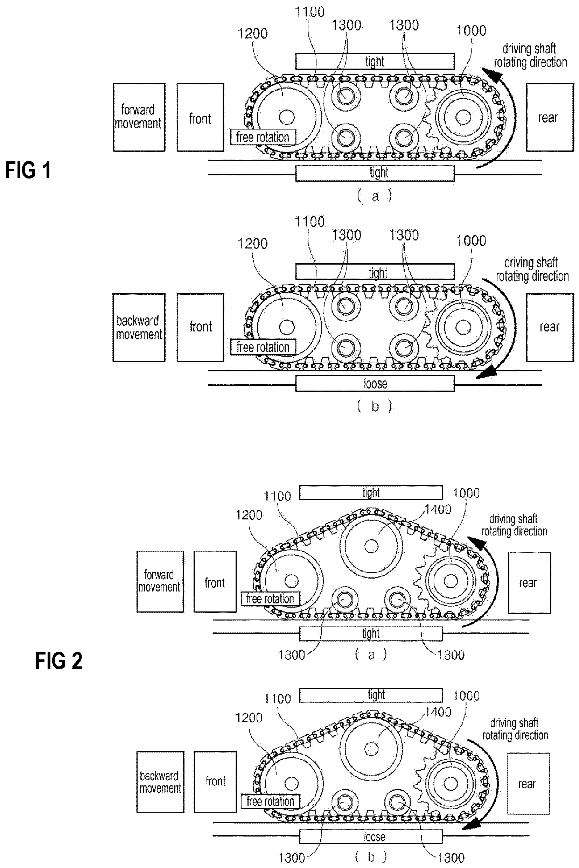

FIG. 1 illustrates that the continuous tracks are loosened in a case where the idler and the tensioner are provided as a single body.

Referring to FIG. 1, a sprocket 1000 is disposed at the right side, and a track link 1100 has a right portion supported by the sprocket 1000 and the other portion supported by an idler 1200. In addition, an upper portion and a lower portion of the track link 1100 are supported by four roller members 1300.

As shown in (a) of FIG. 1, when the continuous tracks move forwards, i.e., when the track link 1100 rotates counterclockwise, the continuous tracks being in contact with a surface are maintained tight.

On the other hand, as shown in (b) of FIG. 1, when the continuous tracks are obstructed by an obstacle or external force while moving backwards, force is applied to the tensioner and the continuous tracks are loosened in a region thereof being in contact with a surface.

FIG. 2 illustrates that the continuous tracks are loosened in a case where the idler and the tensioner are provided as separate bodies.

As shown in (a) of FIG. 2, when the continuous tracks move forwards, i.e., when the track link 1100 rotates counterclockwise, the continuous tracks being in contact with a surface are maintained tight.

On the other hand, as shown in (b) of FIG. 2, when the continuous tracks are obstructed by an obstacle or external force while moving backwards, force is applied to a tensioner 1400 and the continuous tracks are loosened in a region thereof being in contact with a surface.

The foregoing technical configurations are the background art for helping the understanding of the disclosure, and do not mean the prior art widely known in the art to which the disclosure pertains.

### (Documents of Related Art)

### (Patent Document)

Korean Patent No. 10-1069916 (Samsung Heavy Industries Co., Ltd.), September 27, 2011.

### [Disclosure]

### [Technical Problem]

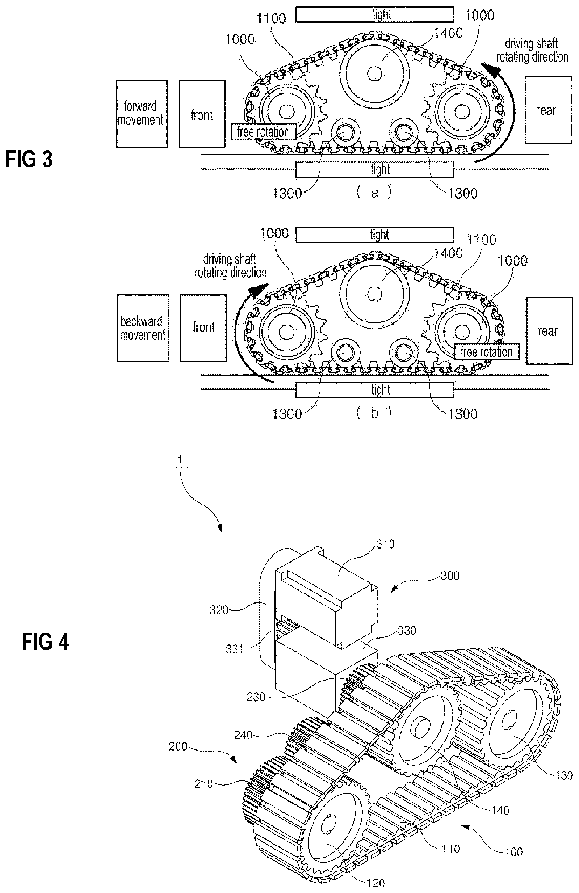

To prevent the continuous tracks from being loosened as described above, as shown in FIG. 3, if the idler is replaced by the sprocket to transmit power frontwards the front and rear sprockets are rotated to have the same number of revolutions, a portion of the track link being in contact with the lower roller member may be loosened or tightened because it moves without being affected by the tensioner.

To tighten the continuous tracks being in contact with the bottom, the power is transmitted to the rear sprocket while the front sprocket freely moves without the transmission of the power in the case where the continuous tracks move forwards, but the power is transmitted to the front sprocket while the rear sprocket freely moves without the transmission of the power in the case where the continuous tracks move backwards.

Accordingly, based on the above-described principle, an aspect of the disclosure is to provide a tension maintaining unit for a caterpillar apparatus for a ship, in which continuous tracks are prevented from being released from the caterpillar apparatus due to failure in maintaining the tension of the continuous tracks by preventing excessive force from being applied to a tensioner that controls the tension of a continuous track, and a caterpillar apparatus including the same.

### [Technical Solution]

According to an embodiment of the disclosure, there is provided a tension maintaining unit for a caterpillar apparatus, including: a rotation direction selector including a first one-way bearing unit with a first one-way bearing connected to a first rotary member of a continuous track body, and a second one-way bearing unit with a second one-way bearing connected to a second rotary member of the continuous track body; and an actuator transmitting power to the first one-way bearing unit and the second one-way bearing unit, wherein tension of a continuous track member provided in the continuous track body is prevented from being loosed as the continuous track body is driven with power of the second one-way bearing and the first one-way bearing rotates freely upon forward movement, the tension of the continuous track member is prevented from being loosened as the continuous track body is driven with power of the first one-way bearing and the second one-way bearing rotates freely upon backward movement, and the rotation direction selector is coupled to and receives power from an actuator output shaft provided in the actuator.

The rotation direction selector may include: a selector driving gear coupled to the actuator output shaft and rotating along with the actuator output shaft; at least one first idler gear including a first side portion connected to the selector driving gear, and a second side portion connected to the first one-way bearing unit, and transmitting rotational force of the selector driving gear to the first one-way bearing unit; and at least one second idler gear including a first side portion connected to the selector driving gear, and a second side portion connected to the second one-way bearing unit, and transmitting the rotational force of the selector driving gear to the second one-way bearing unit.

The at least one first idler gear may include a pair of first idler gears to be in gear with each other, one first idler gear of the pair of first idler gears is in gear with the selector driving gear, and the other first idler gear is in gear with the first one-way bearing unit and disposed higher than the one first idler gear, the at least one second idler gear includes a pair of second idler gears to be in gear with each other, and one second idler gear of the pair of second idler gears may be in gear with the selector driving gear, and the other second idler gear may be in gear with the second one-way bearing unit and is disposed higher than the one second idler gear.

The actuator may include: a driving motor; and a reducer connected to a belt member provided in the driving motor, reducing rotational force of the driving motor, and including the actuator output shaft.

The first idler gear may be provided as a single and has a larger diameter than the selector driving gear or the first driven gear, and the second idler gear may be provided as a single and has a larger diameter than the selector driving gear or the second driven gear.

The rotation direction selector may include: a selector driving gear coupled to the actuator output shaft and rotating along with the output shaft; a central idler gear provided below the selector driving gear and being in gear with the selector driving gear; a first idler gear including a first side portion being in gear with the first one-way bearing unit, and a second side portion being in gear with the central idler gear, and transmitting rotational force of the central idler gear to the first one-way bearing unit; and a second idler gear including a first side portion being in gear with the second idler gear, and a second side portion being in gear with the central idler gear, and transmitting the rotational force of the central idler gear to the second one-way bearing unit.

The rotation direction selector may include: a selector driving gear coupled to the actuator output shaft and rotating along with the output shaft; a pair of first compound gears including a first side portion connected to the selector driving gear, and a second side portion connected to the first one-way bearing unit, and transmitting rotational force of the selector driving gear to the first one-way bearing unit; and a pair of second compound gears including a first side portion connected to the selector driving gear, and a second side portion connected to the second one-way bearing unit, and transmitting the rotational force of the selector driving gear to the second one-way bearing unit.

The rotation direction selector may include: a selector driving gear coupled to the actuator output shaft and rotating along with the output shaft; a central idler gear provided below the selector driving gear and being in gear with the selector driving gear; a pair of first idler gears including a first side portion connected to the central idler gear, and a second side portion connected to the first one-way bearing unit, and transmitting rotational force of the central idler gear to the first one-way bearing unit; and a pair of second idler gears including a first side portion connected to the selector driving gear, and a second side portion connected to the second one-way bearing unit, and transmitting the rotational force of the selector driving gear to the second one-way bearing unit.

The rotation direction selector may include a pair of selector driving gears coupled to the actuator output shaft and rotating along with the actuator output shaft, the actuator may include: a driving motor; and a reducer connected to the driving motor, reducing the rotational force of the driving motor, and including the actuator output shaft, and the actuator may include a pair of actuators, in which the actuator output shaft provided in one actuator is coupled to the selector driving gear disposed on the first one-way bearing unit, and the actuator output shaft provided in the other actuator is coupled to the selector driving gear disposed on the second one-way bearing unit.

The rotation direction selector may include: a selector driving gear coupled to the actuator output shaft and rotating along with the actuator output shaft; a first worm gear being in gear with a first driven gear of the first one-way bearing; a gear shaft including a first side portion to which the first worm gear is coupled; a second worm gear coupled to a second side portion of the gear shaft and being in gear with a second driven gear of the second one-way bearing; and a reduction gear provided in the gear shaft, being in gear with the selector driving gear, and having a larger diameter than the selector driving gear.

The actuator may include: a driving motor; and a reducer connected to the driving motor by a belt member, reducing rotational force of the driving motor, and including the actuator output shaft, the actuator includes a pair of actuators, in which the actuator output shaft provided in one actuator is coupled to the first one-way bearing, and the actuator output shaft provided in the other actuator is coupled to the second one-way bearing.

The first one-way bearing unit may include: a first driven pulley connected to the first one-way bearing by a first belt member; and a first tensioner applying tension by pressurizing the first belt member, the first driven pulley may include a first pulley shaft coupled to the first rotary member, the second one-way bearing unit may include: a second driven pulley connected to the second one-way bearing by a second belt member; and a second tensioner applying tension by pressurizing the second belt member, and the second driven pulley may include a second pulley shaft coupled to the second rotary member.

The actuator output shaft may be coupled to the first one-way bearing and the second one-way bearing.

The actuator may include: a driving motor; and a reducer connected to the driving motor by a belt member, reducing rotational force of the driving motor, and including the actuator output shaft.

Further, according to an embodiment of the disclosure, there is provided a caterpillar apparatus including: a continuous track body including a continuous track member including a first rotary member disposed at a first edge and a second rotary member disposed at a second edge, and a track tensioner disposed in an upper portion of the continuous track member to shape the continuous track member like a triangle, and applying tension to the continuous track member; a rotation direction selector including a first one-way bearing unit with a first one-way bearing connected to the first rotary member of a continuous track body, and a second one-way bearing unit with a second one-way bearing connected to the second rotary member; and an actuator transmitting power to the first one-way bearing unit and the second one-way bearing unit, wherein tension of a continuous track member provided in the continuous track body is prevented from being loosed as the continuous track body is driven with power of the second one-way bearing and the first one-way bearing rotates freely upon forward movement, the tension of the continuous track member is prevented from being loosened as the continuous track body is driven with power of the first one-way bearing and the second one-way bearing rotates freely upon backward movement, and the rotation direction selector is coupled to and receives power from an actuator output shaft provided in the actuator.

### [Advantageous Effects]

According to embodiments of the disclosure, a continuous track is prevented from being released due to failure in maintaining tension by preventing excessive force from being applied to a tensioner that controls the tension of the continuous track.

### [Description of Drawings]

FIG. 1 illustrates that continuous tracks are loosened when an idler and a tensioner are provided as a single body.
FIG. 2 illustrates that continuous tracks are loosened when an idler and a tensioner are provided as separate bodies.
FIG. 3 schematically illustrates a principle of preventing continuous tracks from being loosened.
FIG. 4 schematically illustrates a caterpillar apparatus according to a first embodiment of the disclosure.
FIG. 5 is an exploded perspective view of the caterpillar apparatus of FIG. 4.
FIG. 6 is a perspective view of an actuator shown in FIG. 5.
FIG. 7 is a perspective view showing that a driving motor and a reducer shown in FIG. 6 are arranged in a straight line and that an output shaft of the actuator is directly provided on the driving motor.
FIG. 8 is a front view schematically showing a rotation direction selector shown in FIG. 5.
FIG. 9 is an exploded perspective view of a first one-way bearing unit and a second one-way bearing unit shown in FIG. 5.
FIG. 10 is a front view of a first one-way bearing and a second one-way bearing shown in FIG. 9.
FIG. 11 shows another embodiment of a continuous track body shown in FIG. 4.
FIG. 12 is an operational view of the rotation direction selector shown in FIG. 8.
FIG. 13 shows another embodiment of the rotation direction selector shown in FIG. 8.
FIG. 14 is a perspective view schematically showing a caterpillar apparatus according to a second embodiment of the disclosure.
FIG. 15 is an exploded perspective view of the caterpillar apparatus of FIG. 14.
FIG. 16 is a front view schematically showing a rotation direction selector shown in FIG. 15.
FIG. 17 is a perspective view schematically showing a rotation direction selector according to another embodiment of the disclosure.
FIG. 18 is a perspective view schematically showing a caterpillar apparatus according to a third embodiment of the disclosure
FIG. 19 is an exploded perspective view of the caterpillar apparatus of FIG. 18.
FIG. 20 is a perspective view showing a rotation direction selector shown in FIG. 19.
FIG. 21 is a perspective view schematically showing a caterpillar apparatus according to a fourth embodiment of the disclosure.
FIG. 22 is an exploded perspective view of the caterpillar apparatus of FIG. 21.
FIG. 23 is a perspective view showing a first one-way bearing and a second one-way bearing shown in FIG. 22.
FIG. 24 is a perspective view schematically showing a caterpillar apparatus according to a fifth embodiment of the disclosure.
FIG. 25 is an exploded perspective view of the caterpillar apparatus of FIG. 24.
FIG. 26 is a perspective view showing a rotation direction selector shown in FIG. 25.

### [Best Mode]

To fully understand the disclosure, operational advantages of the disclosure, and objects to be achieved by an embodiment of the disclosure, the accompanying drawings illustrating exemplary embodiments of the disclosure and details described in the accompanying drawings are required to be referred to.

Embodiments of the disclosure will now be described in detail with reference to the accompanying drawings. In the accompanying drawings, like numerals refer to like elements.

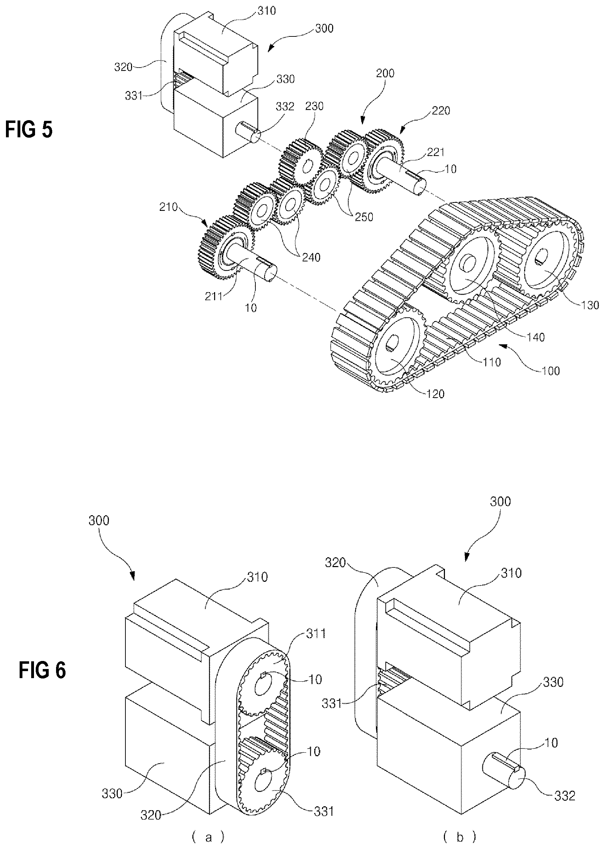

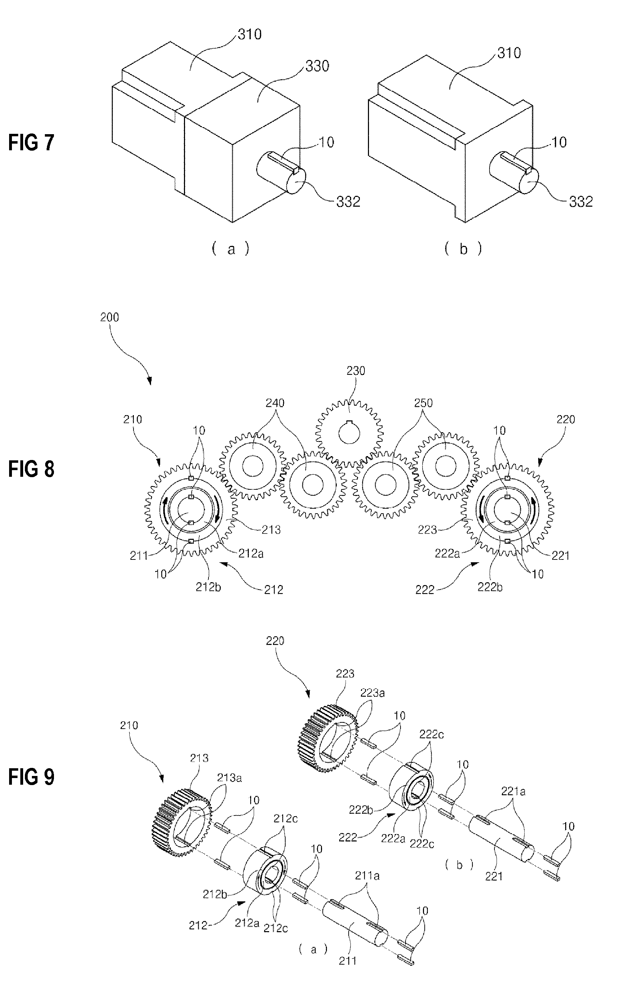

FIG. 4 schematically illustrates a caterpillar apparatus according to a first embodiment of the disclosure, FIG. 5 is an exploded perspective view of the caterpillar apparatus of FIG. 4, FIG. 6 is a perspective view of an actuator shown in FIG. 5, FIG. 7 is a perspective view showing that a driving motor and a reducer shown in FIG. 6 are arranged in a straight line and that an output shaft of the actuator is directly provided on the driving motor, and FIG. 8 is a front view schematically showing a rotation direction selector shown in FIG. 5.

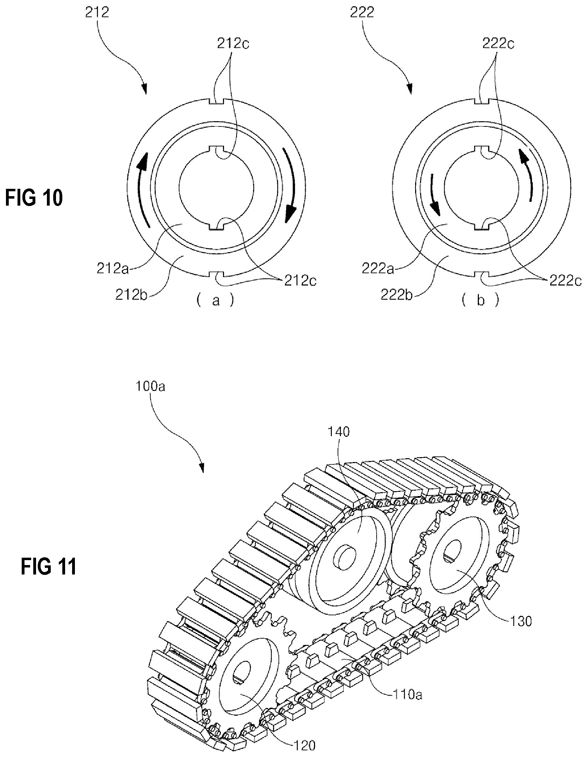

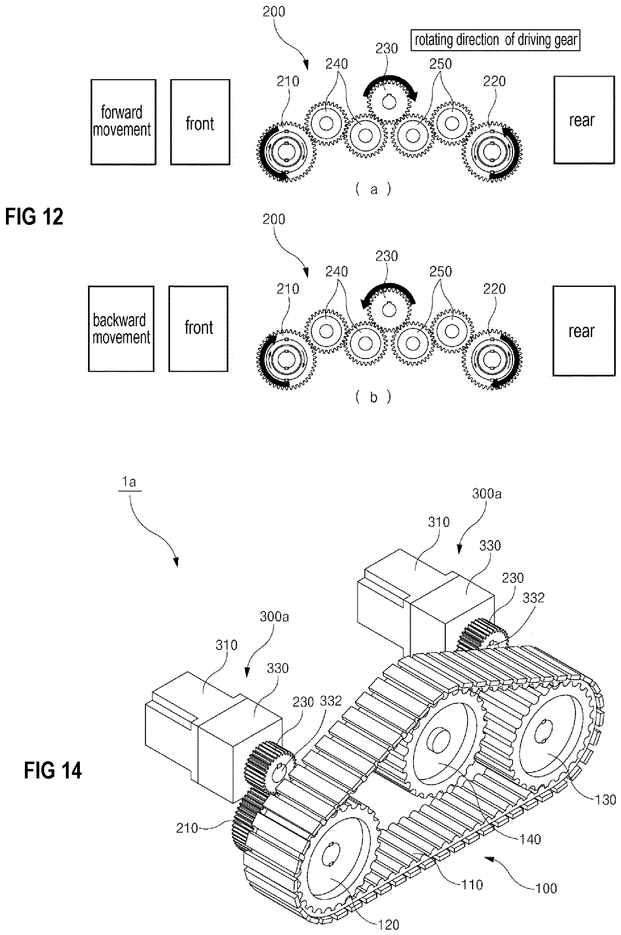

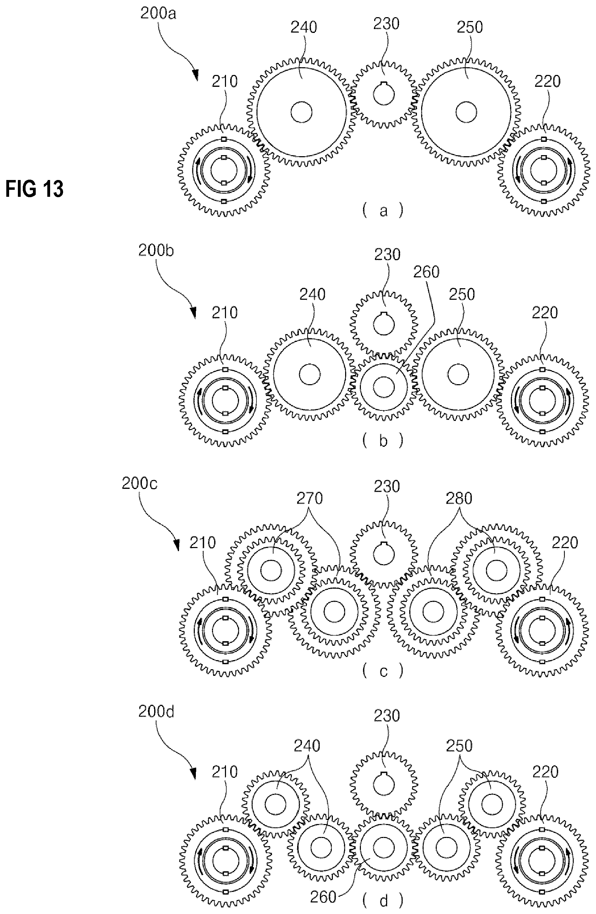

Further, FIG. 9 is an exploded perspective view of a first one-way bearing unit and a second one-way bearing unit shown in FIG. 5, FIG. 10 is a front view of a first one-way bearing and a second one-way bearing shown in FIG. 9, FIG. 11 shows another embodiment of a continuous track body shown in FIG. 4, FIG. 12 is an operational view of the rotation direction selector shown in FIG. 8, and FIG. 13 shows another embodiment of the rotation direction selector shown in FIG. 8.

As shown therein, a caterpillar apparatus 1 according to an embodiment includes a continuous track body 100, a rotation direction selector 200 connected to the continuous track body 100 and selectively transmitting power to the continuous track body 100, and an actuator 300 connected to the rotation direction selector 200 and rotating the rotation direction selector 200.

In this embodiment, a tension maintaining unit may include the rotation direction selector 200 and the actuator 300, which may be applied to other embodiments.

The continuous track body 100 is coupled to the main body of the ship cleaning apparatus, and receives power from a power transmission means provided in the main body so that the ship cleaning apparatus can move forwards or backwards.

In this embodiment, as shown in FIGS. 4 and 5, the continuous track body 100 may include a continuous track member 110, a first rotary member 120 disposed at one edge of the continuous track member 110, a second rotary member 130 disposed at the other edge of the continuous track member 110, and a track tensioner 140 disposed in an upper portion of the continuous track member 110 to shape the continuous track member 110 like a triangle and applying tension to the continuous track member 110.

As shown in FIG. 5, the continuous track member 110 of the continuous track body 100 may be formed by securing track shoes to a timing belt at regular intervals. In this embodiment, the track shoes may be provided on the outer surface of the timing belt to reduce damage caused when the continuous track member 110 is in direct contact with a floor and increase friction with the floor.

In this embodiment, a continuous track member 110a of a continuous track body 100a may be provided as a link as shown in FIG. 11. In this case, the link may be provided by connecting hard track-link units with pins in the form of a ring.

The first rotary member 120 and the second rotary member 130 of the continuous track body 100 may be provided in the form of a concavo-convex pulleys as shown in FIG. 5, or in the form of sprockets as shown in FIG. 11, thereby transmitting power to the continuous track member 110.

In this embodiment, the first rotary member 120 and the second rotary member 130 may be provided in the form of concavo-convex pulleys.

Further, according to an embodiment, the first rotary member 120 may be formed with a hole as shown in FIG. 5 so that a first one-way output shaft 211 of the rotation direction selector 200 can be coupled to the hole with a key member 10, and the second rotary member 130 may be formed with a hole as shown in FIG. 5 so that a second one-way output shaft 211 of the rotation direction selector 200 can be coupled to the hole with the key member 10. In this embodiment, the first rotary member 120 and the second rotary member 130 may be formed with a concavo-convex pattern instead of the foregoing holes to transmit power.

Further, in this embodiment, the first rotary member 120 may directly or indirectly receive power from a first one-way bearing 212, and the second rotary member 130 may directly or indirectly receive power from a second one-way bearing 222.

The track tensioner 140 of the continuous track body 100 may, as shown in FIG. 4, support the upper portion of the continuous track member 110, and be provided in the form of a concavo-convex pulley.

In this embodiment, the track tensioner 140 may be provided with a concavo-convex pattern.

In this embodiment, the continuous track body 100 may include an upper roller or lower roller (not shown) to support the continuous track member 110 as necessary.

The rotation direction selector 200 serves to transmit power from the actuator 300 to the continuous track body 100.

In this embodiment, the rotation direction selector 200 may, as shown in FIG. 5, include a first one-way bearing unit 210 connected to the first rotary member 120 of the continuous track body 100, a second one-way bearing unit 220 connected to the second rotary member 130 of the continuous track body 100, a selector driving gear 230 coupled to an actuator output shaft 332 and rotating along with the actuator output shaft 332, a pair of first idler gears 240 of which one is connected to the selector driving gear 230 and the other is connected to the first one-way bearing unit 210 so as to transmit the rotational force of the selector driving gear 230 to the first one-way bearing unit 210, and a pair of second idler gear 250 of which one is connected to the selector driving gear 230 and the other is connected to the second one-way bearing unit 220 so as to transmit the rotational force of the selector driving gear 230 to the second one-way bearing unit 220.

The first one-way bearing unit 210 of the rotation direction selector 200 may include the first one-way output shaft 211 coupled to the first rotary member 120 with the key member 10 as shown in FIG. 5, the first one-way bearing 212 coupled to the first one-way output shaft 211 with the plurality of key members 10 as shown in (a) of FIG. 9, and a first driven gear 213 of which one side is coupled to the first one-way bearing 212 and the other side is in gear with the first idler gear 240.

In this embodiment, a plurality of first coupling grooves 211a are provided in front and rear portions of the first one-way output shaft 211 as shown in (a) of FIG. 9. and portions of the key members 10 are inserted in the plurality of first coupling grooves 211a and the remaining portions of the key member 10 are inserted in the first rotary member 120 and the first one-way bearing 212 to maintain coupling friction.

In this embodiment, the first one-way bearing 212, as shown in FIG. 9, includes a first inner ring 212a coupled to the first one-way output shaft 211, a first outer ring 212b rotatably coupled to the outer wall of the first inner ring 212a, and a plurality of first ring grooves 212c formed in the inner wall of the first inner ring 212a and the outer wall of the first outer ring 212b and provided as fitting coupling places for the key members 10.

In this embodiment, power may be transmitted to the first inner ring 212a when the first outer ring 212b is rotated in a certain direction, but not transmitted to the first inner ring 212a when the first outer ring 212b is rotated in a direction opposite to the certain direction. For example, the power may be transmitted to the first inner ring 212a when the first outer ring 212b is rotated in the arrow direction as shown in (a) of FIG. 10.

In this embodiment, the first one-way bearing 212 may be mounted to transmit power in a clockwise direction.

In this embodiment, the first driven gear 213 may, as shown in (a) of FIG. 9, be coupled to the outer wall of the first outer ring 212b by a plurality of first key grooves 213a provided on the inner wall thereof and the plurality of key members 10.

The second one-way bearing unit 210 of the rotation direction selector 200 may include the second one-way output shaft 221 coupled to the second rotary member 130 with the key member 10 as shown in FIG. 5, the second one-way bearing 212 coupled to the second one-way output shaft 221 with the plurality of key members 10 as shown in (b) of FIG. 9, and a second driven gear 223 of which one side is coupled to the second one-way bearing 222 and the other side is in gear with the second idler gear 250.

In this embodiment, a plurality of second coupling grooves 221a are provided in front and rear portions of the second one-way output shaft 221 as shown in (b) of FIG. 9. and portions of the key members 10 are inserted in the plurality of second coupling grooves 221a and the remaining portions of the key member 10 are inserted in the second rotary member 130 and the second one-way bearing 222 to maintain coupling friction.

In this embodiment, the second one-way bearing 222, as shown in FIG. 9, includes a second inner ring 222a coupled to the second one-way output shaft 221, a second outer ring 222b rotatably coupled to the outer wall of the second inner ring 222a, and a plurality of second ring grooves 222c formed in the inner wall of the second inner ring 222a and the outer wall of the second outer ring 222b and provided as fitting coupling places for the key members 10.

In this embodiment, power may be transmitted to the second inner ring 222a when the second outer ring 222b is rotated in a certain direction, but not transmitted to the second inner ring 222a when the second outer ring 222b is rotated in a direction opposite to the certain direction. For example, the power may be transmitted to the second inner ring 222a when the second outer ring 222b is rotated in the arrow direction as shown in (b) of FIG. 10.

In this embodiment, the second one-way bearing 222 may be mounted to transmit power in a counterclockwise direction.

In this embodiment, the second driven gear 223 may, as shown in (b) of FIG. 9, be coupled to the outer wall of the second outer ring 222b by a plurality of second key grooves 223a provided on the inner wall thereof and the plurality of key members 10.

The selector driving gear 230 of the rotation direction selector 200 may, as shown in FIG. 5, coupled to the actuator output shaft 332 provided in a reducer 330 of the actuator 300 by the key member 10.

In this embodiment, the selector driving gear 230 may, as shown in FIG. 8, be in gear with one first idler gear 240 and one second idler gear 250.

The pair of first idler gears 240 of the rotation direction selector 200 may, as shown in FIG. 8, be in gear with each other. In FIG. 8, the first idler gear 240 disposed on the left side may be in gear with the first driven gear 213, and the first idler gear 240 disposed on the right side may be in gear with the selector driving gear 230.

The pair of second idler gears 250 of the rotation direction selector 200 may, as shown in FIG. 8, be in gear with each other. In FIG. 8, the second idler gear 250 disposed on the left side may be in gear with the selector driving gear 230, and the second idler gear 250 disposed on the right side may be in gear with the second driven gear 223.

In this embodiment, the gear applied to the rotation direction selector 200 may include a spur gear, a helical gear, or a double helical gear.

Below, the operations of the rotation direction selector 200 will be described with reference to FIG. 12.

First, power transmission of when the continuous track body 100 moves forward will be described.

With the force of the driving motor 310, the first outer ring 212b of the first one-way bearing 212 and the second outer ring 222b of the second one-way bearing 222 are rotated counterclockwise by the same number of revolutions.

In this case, the first one-way bearing 212 transmits power to the first inner ring 212a only when the first outer ring 212b rotates clockwise. Therefore, the first inner ring 212a of the first one-way bearing 212 rotates freely, and thus the first rotary member 120 of the continuous track body 100 can rotates freely.

The second one-way bearing 222 transmits power to the second inner ring 222a only when rotating counterclockwise. Therefore, power is transmitted to the second inner ring 222a of the second one-way bearing 222, and thus the power is transmitted to the second rotary member 130 of the continuous track body 100.

Next, power transmission of when the continuous track body 100 moves backwards will be described.

With the force of the driving motor 310, the first outer ring 212b of the first one-way bearing 212 and the second outer ring 222b of the second one-way bearing 222 are rotated clockwise by the same number of revolutions.

In this case, the first one-way bearing 212 transmits power to the first inner ring 212a only when the first outer ring 212b rotates clockwise. Therefore, power is transmitted to the first inner ring 212a of the first one-way bearing 212, and thus the power is transmitted to the first rotary member 120 of the continuous track body 100.

The second one-way bearing 222 transmits power to the second inner ring 222a only when the second outer ring 222b rotates counterclockwise. Therefore, the second inner ring 222a of the second one-way bearing 222 rotates freely, and thus the second rotary member 130 of the continuous track body 100 rotates freely.

In other words, in the case of the forward movement, the first rotary member 120, for example, a front wheel serves as an idler. In the case of the backward movement, the second rotary member 130, for example, a rear wheel serves as an idler. Therefore, the tension of the continuous track member 110 is not loosened in either direction.

Meanwhile, the rotation direction selector 200 in this embodiment may be variously implemented in terms of the selector driving gear 230 as shown in FIG. 13.

In a rotation direction selector 200a, as shown in (a) of FIG. 13, a single first idler gear 240 is provided having a diameter larger than those of the selector driving gear 230 and the first one-way bearing unit 210, and a single second idler gear 250 is provided having a diameter larger than those of the selector driving gear 230 and the second one-way bearing unit 220.

A rotation direction selector 200b may, as shown in (b) of FIG. 13, may include the selector driving gear 230, the first one-way bearing unit 210, the second one-way bearing unit 220, a central idler gear 260 provided below the selector driving gear 230 and being in gear with the selector driving gear 230, the first idler gear 240 being in gear with the first one-way bearing unit 210 at one side, being in gear with the central idler gear 260 at the other side, and transmitting the rotational force of the central idler gear 260 to the first one-way bearing unit 210, and the second idler gear 250 being in gear with the second one-way bearing unit 220 at one side, being in gear with the central idler gear 260 at the other side, and transmitting the rotational force of the central idler gear 260 to the second one-way bearing unit 220.

To increase a reduction ratio, a rotation direction selector 200c may, as shown in (c) of FIG. 13, include the selector driving gear 230, the first one-way bearing unit 210, the second one-way bearing unit 220, a pair of first compound gears 270 connected to the selector driving gear 230 at one side, connected to the first one-way bearing unit 210 at the other side, and transmitting the rotational force of the selector driving gear 230 to the first one-way bearing unit 210, and a pair of second compound gears 280 connected to the selector driving gear 230 at one side, connected to the second one-way bearing unit 220 at the other side, and transmitting the rotational force of the selector driving gear 230 to the second one-way bearing unit 220.

A rotation direction selector 200d may, as shown in (d) of FIG. 13, include the selector driving gear 230, the first one-way bearing unit 210, the second one-way bearing unit 220, the central idler gear 260 provided below the selector driving gear 230 and being in gear with the selector driving gear 230, a pair of first idler gears 240 connected to the central idler gear 260 at one side, connected to the first one-way bearing unit 210 at the other side, and transmitting the rotational force of the central idler gear 260 to the first one-way bearing unit 210, and a pair of second idler gears 250 connected to the selector driving gear 230 at one side, connected to the second one-way bearing unit 220 at the other side, and transmitting the rotational force of the selector driving gear 230 to the second one-way bearing unit 220.

The actuator 300, which transmits power to the first one-way bearing unit 210 and the second one-way bearing unit 220, may, as shown in FIG. 5, include the driving motor 311 having a driving pulley 311, and the reducer 330 connected to a belt member 320 connected to the driving motor 310 and reducing the rotational force of the driving motor 310.

The reducer 330 of the actuator 300 may, as shown in (a) of FIG. 6, be provided with a driven pulley 331, and the belt member 320 may be supported on the driven pulley 331 at one side thereof.

Further, the reducer 330 in this embodiment may, as shown in FIG. 5, be provided with the actuator output shaft 332, and the actuator output shaft 332 may be coupled to the selector driving gear 230 by the key member 10.

Further, the reducer 330 in this embodiment may include a bevel gear, a worm gear, or a helical gear, of which a mounting direction is changeable.

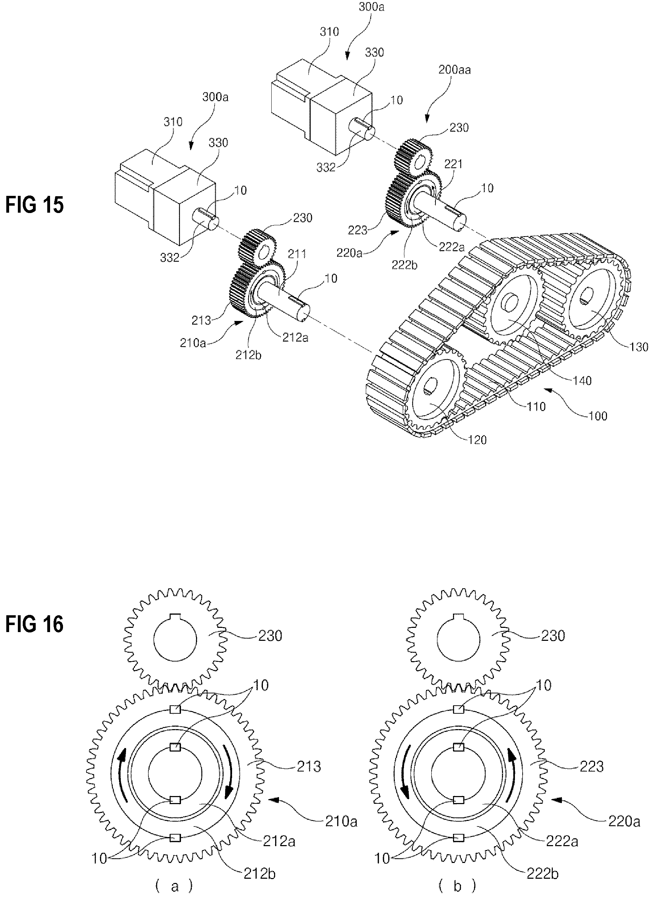

FIG. 14 is a perspective view schematically showing a caterpillar apparatus according to a second embodiment of the disclosure, FIG. 15 is an exploded perspective view of the caterpillar apparatus of FIG. 14, and FIG. 16 is a front view schematically showing the rotation direction selector 200 shown in FIG. 15.

According to this embodiment, a caterpillar apparatus 1a may, as shown in FIG. 15, include the continuous track body 100, a rotation direction selector 200aa connected to the continuous track body 100 and selectively transmitting power to the continuous track body 100, and an actuator 300a connected to the rotation direction selector 200aa and rotating the rotation direction selector 200aa.

The continuous track body 100 may include the elements of the foregoing continuous track body 100 according to the first embodiment, in which the first rotary member 120 may be formed with a first coupling hole 121, and the second rotary member 130 may be formed with a second coupling hole 131.

The rotation direction selector 200aa may include the foregoing selector driving gear 230 according to the first embodiment, a first one-way bearing unit 210a, and a second one-way bearing unit 220a.

In this embodiment, the selector driving gears 230 may, as shown in FIG. 15, may form a pair, in which one selector driving gear 230 is in gear with the first driven gear 213 of the first one-way bearing unit 210a, and the other selector driving gear 230 is in gear with the second driven gear 223 of the second one-way bearing unit 220a.

In this embodiment, the first one-way output shaft 211 of the first one-way bearing unit 210a may be coupled to the first coupling hole 121 of the first rotary member 120 by the key member 10.

In this embodiment, the second one-way output shaft 221 of the second one-way bearing unit 220a may be coupled to the second coupling hole 131 of the second rotary member 130 by the key member 10.

In this embodiment, the actuator 300a may, as shown in FIG. 15, include the driving motor 310, and the reducer 330 connected to the driving motor 310, reducing the rotational force of the driving motor 310, and having the actuator output shaft 332.

In this embodiment, the driving motor 310 and the reducer 330 may, as shown in FIG. 15, be provided on a straight line.

In this embodiment, the actuators 300a may form a pair, in which the actuator output shaft 332 provided in one actuator 300a is coupled to the selector driving gear 230 disposed on the first one-way bearing unit 210a by the key member 10, and the actuator output shaft 332 provided in the other actuator 300a is coupled to the selector driving gear 230 disposed on the second one-way bearing unit 220a by the key member 10.

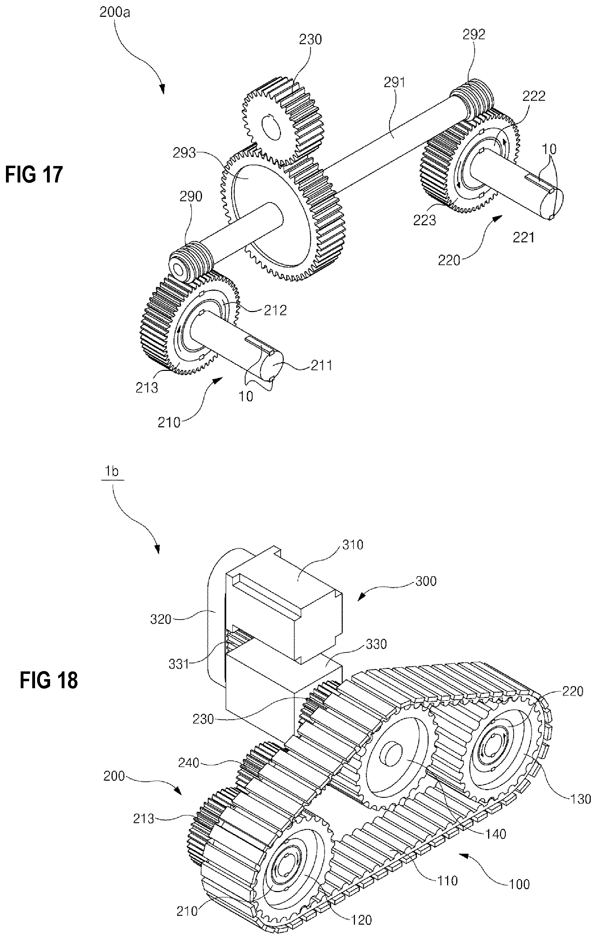

FIG. 17 is a perspective view schematically showing a rotation direction selector 200e according to another embodiment of the disclosure.

According to this embodiment, the rotation direction selector 200e may, as shown in FIG. 17, include the selector driving gear 230, the first one-way bearing unit 210, the second one-way bearing unit 220, a first worm gear 290 being in gear with the first driven gear 213 of the first one-way bearing 212, a gear shaft 291 having one side to which the first worm gear 290 is coupled, a second worm gear 292 coupled to the other side of the gear shaft 291 and being in gear with the second driven gear 223 of the second one-way bearing 222, and a reduction gear 293 provided in the gear shaft 291, being in gear with the selector driving gear 230, and having a larger diameter than the selector driving gear 230.

In this embodiment, the selector driving gear 230 may be coupled to the actuator output shaft 332 and rotate along with the actuator output shaft 332.

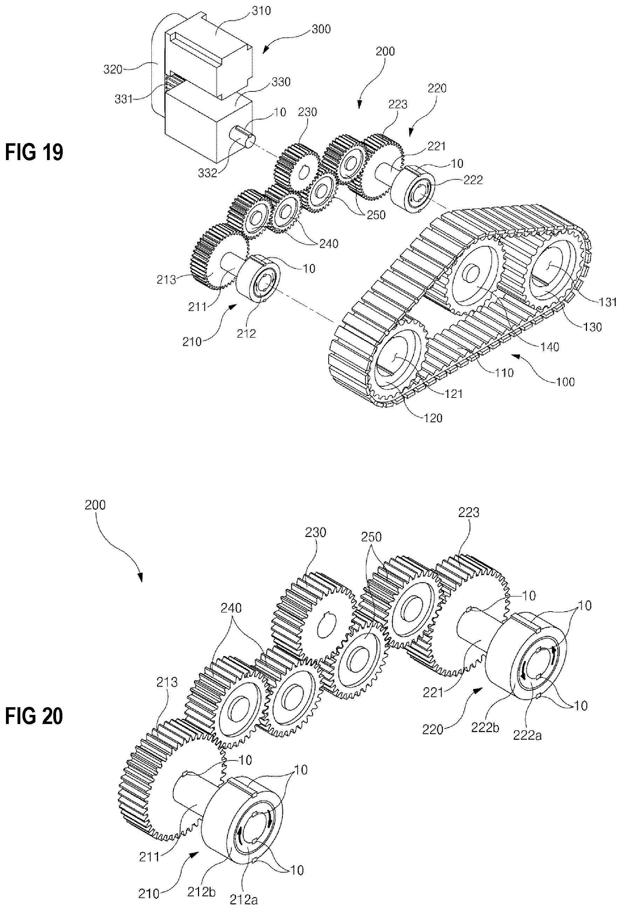

FIG. 18 is a perspective view schematically showing a caterpillar apparatus according to a third embodiment of the disclosure, FIG. 19 is an exploded perspective view of the caterpillar apparatus of FIG. 18, and FIG. 20 is a perspective view showing the rotation direction selector 200 shown in FIG. 19.

According to this embodiment, a caterpillar apparatus 1b may, as shown in FIG. 19, include the continuous track body 100, the rotation direction selector 200 connected to the continuous track body 100 and selectively transmitting power to the continuous track body 100, and the actuator 300 connected to the rotation direction selector 200 and rotating the rotation direction selector 200.

This embodiment is different from the foregoing embodiments in that the first one-way bearing 212 of the rotation direction selector 200 is directly coupled to the first coupling hole 121 formed in the first rotary member 120, and the second one-way bearing 222 is directly coupled to the second coupling hole 131 formed in the second rotary member 130.

In this embodiment, as shown in FIG. 20, the first one-way bearing 212 of the first one-way bearing unit 210 may be coupled to a first end portion of the first one-way output shaft 211 by the key member 10, and the first driven gear 213 may be coupled to a second end portion of the first one-way output shaft 211 by the key member 10.

In this embodiment, as shown in FIG. 20, the second one-way bearing 222 of the second one-way bearing unit 220 may be coupled to a first end portion of the second one-way output shaft 221 by the key member 10, and the second driven gear 223 may be coupled to a second end portion of the second one-way output shaft 221 by the key member 10.

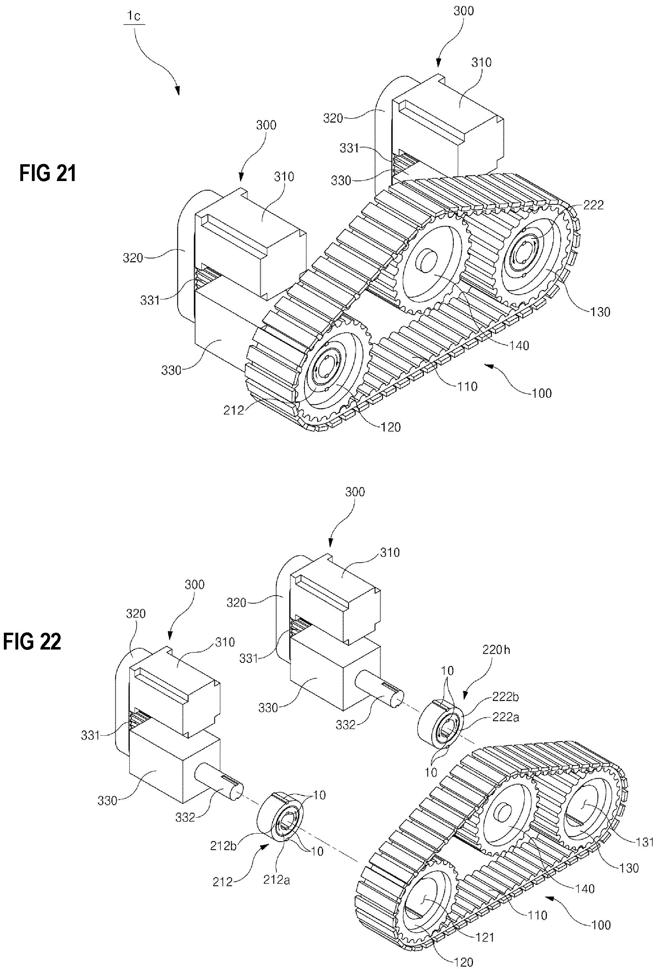

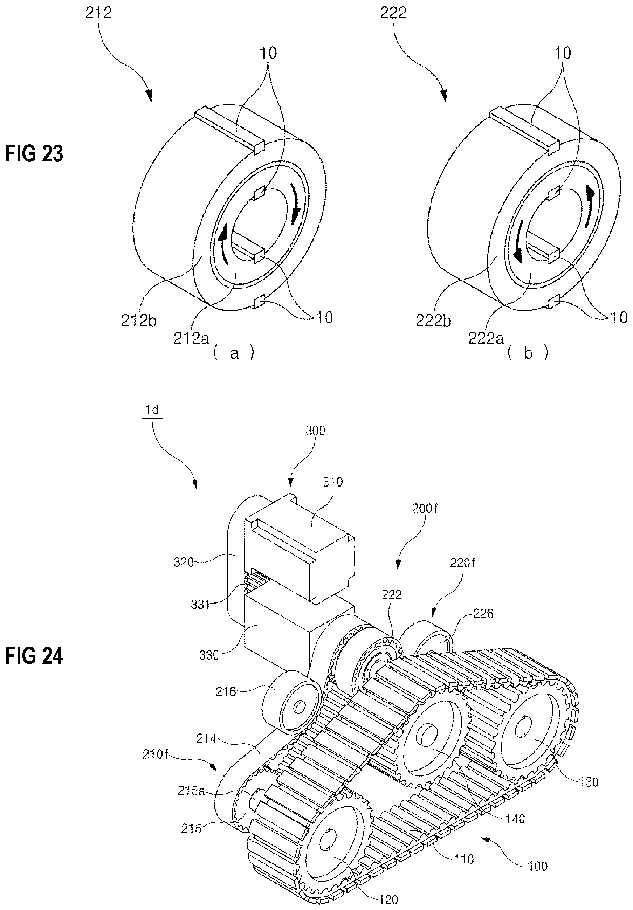

FIG. 21 is a perspective view schematically showing a caterpillar apparatus according to a fourth embodiment of the disclosure, FIG. 22 is an exploded perspective view of the caterpillar apparatus of FIG. 21, and FIG. 23 is a perspective view showing a first one-way bearing and a second one-way bearing shown in FIG. 22.

According to this embodiment, a caterpillar apparatus 1c may, as shown in FIG. 22, include the continuous track body 100, a rotation direction selector 200h connected to the continuous track body 100 and selectively transmitting power to the continuous track body 100, and the actuator 300 connected to the rotation direction selector 200h and rotating the rotation direction selector 200h.

This embodiment is different from the foregoing embodiments in that the rotation direction selector 200h includes only the first one-way bearing 212 and the second one-way bearing 222.

In this embodiment, the first inner ring 212a of the first one-way bearing 212 may be coupled to the actuator output shaft 332 of the actuator 300 by the key member 10, and the first outer ring 212b may be coupled to the first coupling hole 121 of the first rotary member 120 by the key member 10.

In this embodiment, the second inner ring 222a of the second one-way bearing 222 may be coupled to the actuator output shaft 332 of the actuator 300 by the key member 10, and the second outer ring 222b may be coupled to the second coupling hole 131 of the second rotary member 130 by the key member 10.

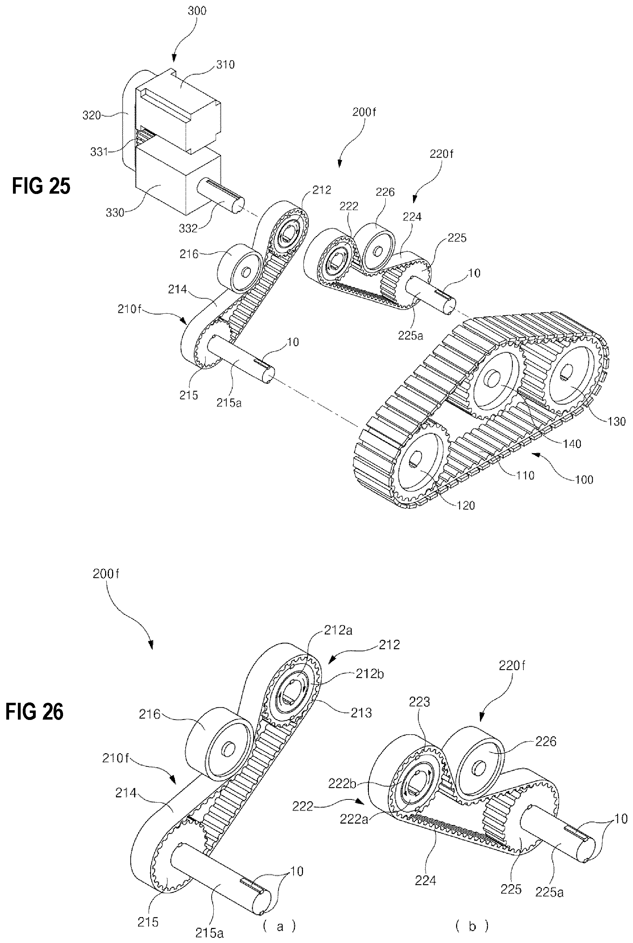

FIG. 24 is a perspective view schematically showing a caterpillar apparatus according to a fifth embodiment of the disclosure, FIG. 25 is an exploded perspective view of the caterpillar apparatus of FIG. 24, and FIG. 26 is a perspective view showing the rotation direction selector 200 shown in FIG. 25.

According to this embodiment, a caterpillar apparatus 1f may, as shown in FIG. 25, include the continuous track body 100, a rotation direction selector 200f connected to the continuous track body 100 and selectively transmitting power to the continuous track body 100, and the actuator 300 connected to the rotation direction selector 200f and rotating the rotation direction selector 200f.

This embodiment is different from the foregoing embodiments in that the rotation direction selector 200f is provided differently.

A first one-way bearing unit 210f of the rotation direction selector 200f may, as shown in FIG. 25, include the first one-way bearing 212, a first driven pulley 215 connected to the first one-way bearing 212 by a first belt member 214, and a first tensioner 216 applying tension by pressurizing the first driven pulley 215.

In this embodiment, the first driven pulley 215 includes a first pulley shaft 215a coupled to the first rotary member 120.

A second one-way bearing unit 220f of the rotation direction selector 200f may, as shown in FIG. 25, include the second one-way bearing 222, a second driven pulley 225 connected to the second one-way bearing 222 by a second belt member 224, and a second tensioner 226 applying tension by pressurizing a second driven pulley 225.

In this embodiment, the second driven pulley 225 includes a second pulley shaft 225a coupled to the second rotary member 130.

As described above, according to an embodiment, the continuous tracks are prevented from being released due to failure in maintaining tension by preventing excessive force from being applied to the tensioner that controls the tension of the continuous track.

It will be apparent to a person having ordinary skill in the art that the disclosure is not limited to the foregoing embodiments and various modifications and changes can be made without departing from the spirit and scope of the disclosure. Accordingly, it will be understood that such modifications or changes fall within the scope of the appended claims of the disclosure.

**(Reference Numerals)**

| | | | |
|---|---|---|---|
| 1: | caterpillar apparatus 100,100a: continuous track body | 110: | continuous track member |
| 120: | first rotary member | 121: | first coupling hole |
| 130: | second rotary member | 131: | second coupling hole |
| 140: | track tensioner | | |
| 200, 200a, 200aa, 200b, 200c, 200d, 200e, 200f, 200h: | rotation direction selector | | |
| 210: | first one-way bearing unit | 211: | first one-way output shaft |
| 211a: | first coupling groove | 212: | first one-way bearing |
| 212a: | first inner ring | 212b: | first outer ring |
| 212c: | first ring groove | 213: | first driven gear |
| 214: | first belt member | 215: | first driven pulley |
| 215a: | first pulley shaft | 216: | first tensioner |
| 220: | second one-way bearing unit | 221: | second one-way output shaft |
| 221a: | second coupling groove | 222: | second one-way bearing |
| 222a: | second inner ring | 222b: | second outer ring |
| 222c: | second ring groove | 223: | second driven gear |
| 223a: | second key groove | 224: | second belt member |
| 225: | second driven pulley | 225a: | second pulley shaft |
| 226: | second tensioner | 230: | selector driving gear |
| 240: | first idler gear | 250: | second idler gear |
| 260: | central idler gear | 270: | first compound gear |
| 280: | second compound gear | 290: | first worm gear |
| 291: | gear shaft | 292: | second worm gear |
| 293: | reduction gear | 300,300a: | actuator |
| 310: | driving motor | 320: | belt member |
| 330: | reducer | 331: | driven pulley |
| 332: | actuator output shaft | 1000: | sprocket |
| 1100: | track link | 1200: | idler |
| 1300: | roller member | 10: | key member |

## Claims

1. A tension maintaining unit for a caterpillar apparatus, comprising:
a rotation direction selector comprising a first one-way bearing unit with a first one-way bearing connected to a first rotary member of a continuous track body, and a second one-way bearing unit with a second one-way bearing connected to a second rotary member of the continuous track body; and
an actuator transmitting power to the first one-way bearing unit and the second one-way bearing unit, wherein
tension of a continuous track member provided in the continuous track body is prevented from being loosed as the continuous track body is driven with power of the second one-way bearing and the first one-way bearing rotates freely upon forward movement,
the tension of the continuous track member is prevented from being loosened as the continuous track body is driven with power of the first one-way bearing and the second one-way bearing rotates freely upon backward movement, and
the rotation direction selector is coupled to and receives power from an actuator output shaft provided in the actuator.

2. The tension maintaining unit for claim 1, wherein the rotation direction selector comprises:
a selector driving gear coupled to the actuator output shaft and rotating along with the actuator output shaft;
at least one first idler gear comprising a first side portion connected to the selector driving gear, and a second side portion connected to the first one-way bearing unit, and transmitting rotational force of the selector driving gear to the first one-way bearing unit; and
at least one second idler gear comprising a first side portion connected to the selector driving gear, and a second side portion connected to the second one-way bearing unit, and transmitting the rotational force of the selector driving gear to the second one-way bearing unit.

3. The tension maintaining unit for claim 2, wherein
the at least one first idler gear comprises a pair of first idler gears to be in gear with each other,
one first idler gear of the pair of first idler gears is in gear with the selector driving gear, and the other first idler gear is in gear with the first one-way bearing unit and disposed higher than the one first idler gear,
the at least one second idler gear comprises a pair of second idler gears to be in gear with each other, and
one second idler gear of the pair of second idler gears is in gear with the selector driving gear, and the other second idler gear is in gear with the second one-way bearing unit and is disposed higher than the one second idler gear.

4. The tension maintaining unit for claim 1, wherein the actuator comprises:
a driving motor; and
a reducer connected to a belt member provided in the driving motor, reducing rotational force of the driving motor, and comprising the actuator output shaft.

5. The tension maintaining unit for claim 2, wherein
the first idler gear is provided as a single and has a larger diameter than the selector driving gear or a first driven gear of the first one-way bearing unit, and
the second idler gear is provided as a single and has a larger diameter than the selector driving gear or a second driven gear of the second one-way bearing unit.

6. The tension maintaining unit for claim 2, wherein the rotation direction selector comprises:
a selector driving gear coupled to the actuator output shaft and rotating along with the output shaft;
a central idler gear provided below the selector driving gear and being in gear with the selector driving gear;
a first idler gear comprising a first side portion being in gear with the first one-way bearing unit, and a second side portion being in gear with the central idler gear, and transmitting rotational force of the central idler gear to the first one-way bearing unit; and
a second idler gear comprising a first side portion being in gear with the second one-way bearing unit, and a second side portion being in gear with the central idler gear, and transmitting the rotational force of the central idler gear to the second one-way bearing unit.

7. The tension maintaining unit for claim 2, wherein the rotation direction selector comprises:
a selector driving gear coupled to the actuator output shaft and rotating along with the output shaft;
a pair of first compound gears comprising a first side portion connected to the selector driving gear, and a second side portion connected to the first one-way bearing unit, and transmitting rotational force of the selector driving gear to the first one-way bearing unit; and
a pair of second compound gears comprising a first side portion connected to the selector driving gear, and a second side portion connected to the second one-way bearing unit, and transmitting the rotational force of the selector driving gear to the second one-way bearing unit.

8. The tension maintaining unit for claim 2, wherein the rotation direction selector comprises:
a selector driving gear coupled to the actuator output shaft and rotating along with the output shaft;
a central idler gear provided below the selector driving gear and being in gear with the selector driving gear;
a pair of first idler gears comprising a first side portion connected to the central idler gear, and a second side portion connected to the first one-way bearing unit, and transmitting rotational force of the central idler gear to the first one-way bearing unit; and
a pair of second idler gears comprising a first side portion connected to the selector driving gear, and a second side portion connected to the second one-way bearing unit, and transmitting the rotational force of the selector driving gear to the second one-way bearing unit.

9. The tension maintaining unit for claim 1, wherein
the rotation direction selector comprises a pair of selector driving gears coupled to the actuator output shaft and rotating along with the actuator output shaft,
the actuator comprises:
a driving motor; and
a reducer connected to the driving motor, reducing the rotational force of the driving motor, and comprising the actuator output shaft, and
the actuator comprises a pair of actuators, in which the actuator output shaft provided in one actuator is coupled to the selector driving gear disposed on the first one-way bearing unit, and the actuator output shaft provided in the other actuator is coupled to the selector driving gear disposed on the second one-way bearing unit.

10. The tension maintaining unit for claim 1, wherein the rotation direction selector comprises:
a selector driving gear coupled to the actuator output shaft and rotating along with the actuator output shaft;
a first worm gear being in gear with a first driven gear of the first one-way bearing;
a gear shaft comprising a first side portion to which the first worm gear is coupled;
a second worm gear coupled to a second side portion of the gear shaft and being in gear with a second driven gear of the second one-way bearing; and
a reduction gear provided in the gear shaft, being in gear with the selector driving gear, and having a larger diameter than the selector driving gear.

11. The tension maintaining unit for claim 1, wherein
the actuator comprises:
a driving motor; and
a reducer connected to the driving motor by a belt member, reducing rotational force of the driving motor, and comprising the actuator output shaft,
the actuator comprises a pair of actuators, in which the actuator output shaft provided in one actuator is coupled to the first one-way bearing, and the actuator output shaft provided in the other actuator is coupled to the second one-way bearing.

12. The tension maintaining unit for claim 1, wherein
the first one-way bearing unit comprises:
a first driven pulley connected to the first one-way bearing by a first belt member; and
a first tensioner applying tension by pressurizing the first belt member,
the first driven pulley comprises a first pulley shaft coupled to the first rotary member,
the second one-way bearing unit comprises:
a second driven pulley connected to the second one-way bearing by a second belt member; and
a second tensioner applying tension by pressurizing the second belt member, and
the second driven pulley comprises a second pulley shaft coupled to the second rotary member.

13. The tension maintaining unit for claim 12, wherein the actuator output shaft is coupled to the first one-way bearing and the second one-way bearing.

14. The tension maintaining unit for claim 12, wherein the actuator comprises:
a driving motor; and
a reducer connected to the driving motor by a belt member, reducing rotational force of the driving motor, and comprising the actuator output shaft.

15. A caterpillar apparatus comprising:
a continuous track body comprising a continuous track member comprising a first rotary member disposed at a first edge and a second rotary member disposed at a second edge, and a track tensioner disposed in an upper portion of the continuous track member to shape the continuous track member like a triangle, and applying tension to the continuous track member;
a rotation direction selector comprising a first one-way bearing unit with a first one-way bearing connected to the first rotary member of a continuous track body, and a second one-way bearing unit with a second one-way bearing connected to the second rotary member; and
an actuator transmitting power to the first one-way bearing unit and the second one-way bearing unit, wherein
tension of a continuous track member provided in the continuous track body is prevented from being loosed as the continuous track body is driven with power of the second one-way bearing and the first one-way bearing rotates freely upon forward movement,
the tension of the continuous track member is prevented from being loosened as the continuous track body is driven with power of the first one-way bearing and the second one-way bearing rotates freely upon backward movement, and
the rotation direction selector is coupled to and receives power from an actuator output shaft provided in the actuator.
